# EUROPÄISCHE PATENTANMELDUNG

(11) **EP 3 069 686 A1**
(43) Veröffentlichungstag der Anmeldung: **21.09.2016**
(21) Anmeldenummer: 15159978.4
(22) Anmeldetag: 19.03.2015
(51) Int. Cl.: A61C 19/06, A61C 8/02

(54) **Vorrichtung und Aufsatzkörper zur Regeneration von Zahnfleisch**

(71) Anmelder: Wilson, Jaroslav, 4040 Linz (AT); Six, Alexander, 4320 Perg (AT)
(72) Erfinder: Wilson, Jaroslav, 4040 Linz (AT); Six, Alexander, 4320 Perg (AT)
(74) Vertreter: Jell, Friedrich

(57) **Zusammenfassung**

Es wird eine Vorrichtung (100) und ein Aufsatzkörper (1) zur Regeneration von Zahnfleisch (3) mit einer mindestens an einen Zahn (2) und dessen Zahnfleisch (3) ansetzbaren Aufnahme (4), mit einer in der Aufnahme (4) vorgesehenen Aussparung (5) für das regenerierte Zahnfleisch (3), mit mindestens einem mit der Aussparung (5) verbundenen Anschluss (6) für ein Unterdruckmittel zur Erzeugung eines Unterdrucks in der Aussparung (5) und mit wenigstens einer gasdichten Dichtlippe (9) zur Abdichtung der Aufnahme (4). Um deren Wirkung und Handhabung zu verbessern, wird vorgeschlagen, dass der in seinem Material gasdichte Aufsatzkörper (1) in der Dichtlippe (9) ausläuft und einen Schlauchanschluss (6) zum Anschließen eines Unterdruckschlauchs (7) einer Pumpe (8) aufweist.

## Beschreibung

Die Erfindung betrifft eine Vorrichtung und einen Aufsatzkörper Aufsatzkörper zur Regeneration von Zahnfleisch mit einer mindestens an einen Zahn und dessen Zahnfleisch ansetzbaren Aufnahme, mit einer in der Aufnahme vorgesehenen Aussparung für das regenerierte Zahnfleisch, mit mindestens einem mit der Aussparung verbundenen Anschluss für ein Unterdruckmittel zur Erzeugung eines Unterdrucks in der Aussparung und mit wenigstens einer gasdichten Dichtlippe zur Abdichtung der Aufnahme.

Aus dem Stand der Technik ist eine Vorrichtung zur Regeneration von Zahnfleisches bekannt (DE102009021218A1), insbesondere zur Regeneration von degeneriertem Papillengewebe der Gingiva und/oder zur Regeneration von degeneriertem Interdentalpapillengewebe. Diese Vorrichtung weist einen Aufsatzkörper auf, der auf Zähne und das die Zähne umgebende Zahnfleisch aufgesetzt werden kann. Hierzu bildet dieser Aufsatzkörper eine Ausnehmung in Form eines Negativabdrucks des Unter- oder Oberkiefers aus und spiegelt damit den Istzustand von Zahn und Zahnfleisch wider. Um einen Regenerationszustand zu erreichen, ist diese Ausnehmung durch eine oder mehrere Aussparungen zusätzlich vergrößert, um in diesem Freibereich das Zahnfleisch regenerieren zu können - und zwar, indem hier Unterdruck erzeugt wird. Dieser Unterdruck wird mit einem kompressiblen Pumpenkörper geschaffen, der am Aufsatzkörper aufgesetzt, mit dessen offenporigen Anschluss verbunden ist. Zudem weist die Vorrichtung eine gasdichte Hüllschicht auf, die den offenporigen Aufsatzkörper umschließt und in einer Dichtlippe endet, um ein Ansaugen von Leckluft zu minimieren. Dennoch zeigt sich bei dieser Vorrichtung nachteilig, dass der Unterdruck in der Aussparung nicht lange aufrechterhalten werden kann - was ein ständiges Betätigen des Pumpenkörpers bedarf und damit zu hohen Druckschwankungen in der Aussparung führen kann. Eine effektive und reproduzierbare Regeneration von Zahnfleisch bedarf jedoch konstanter Druckverhältnisse, was eine derartige Vorrichtung des Stands der Technik nicht sicherstellten kann. Die Erfindung hat sich daher die Aufgabe gestellt, eine Vorrichtung zur Regeneration von Zahnfleisch dahingehend zu verbessern, dass dies trotz konstruktiver Einfachheit reproduzierbar erfolgen kann.

Die Erfindung löst die gestellte Aufgabe dadurch, dass der in seinem Material gasdichte Aufsatzkörper in der Dichtlippe ausläuft und einen Schlauchanschluss zum Anschließen eines Unterdruckschlauchs einer Pumpe aufweist.

Weist der Aufsatzkörper einem Schlauchanschluss zum Anschließen eines Unterdruckschlauchs einer Pumpe auf, kann damit zunächst ein kontinuierlicher und vergleichsweise genau einstellbarer Unterdruck an den Aufsatzkörper bzw. in der Aussparung angelegt werden. Da zudem der Aufsatzkörper in seinem Material gasdicht ist, bedarf es im Gegensatz zum Stand der Technik, der eine Hüllschicht zur Abdichtung des Aufsatzkörpers fordert, keiner besonderen konstruktiven Maßnahmen zum Anschluss einer Unterdruckquelle - was die Konstruktion des Aufsatzkörpers weiter vereinfachen kann. Besonders aber können die Vorteile der gasdichten Materialausführung des Aufsatzkörpers in der Abdichtung der Ausnehmung bzw. Aussparung gegenüber Leckluft zur Geltung kommen. Der Aufsatzkörper läuft nämlich in der Dichtlippe aus, wodurch der an die Dichtlippe anschließende - gasdichte - Teil des Aufsatzköpers die Aussparung zusätzlich gegenüber Falschluft abdichtet, zumal auch dieser durch den im Aufsatzkörper herrschenden Unterdruck an das Zahnfleisch mitangesaugt wird. Der erfindungsgemäße Aufsatzkörper kann daher die Aussparung besonders zuverlässig gegenüber Leckluft abdichten und somit Druckschwankungen in der Aussparung vermeiden. Eine besonders stabile und vergleichsweise konstante bzw. sicher dosierbare Beaufschlagung des Zahnfleisches mit Unterdruck kann so gewährleistet werden - wodurch das Zahnfleisch mithilfe des erfindungsgemäßen Aufsatzkörpers reproduzierbar regeneriert werden kann.

Im Allgemeinen wird festgehalten, dass der Aufsatzkörper zur Behandlung der interdentalen Gingiva geeignet ist, insbesondere zum Wiederaufbau des interdentalen Papillengewebes, nämlich der oralen und vestibulären Papillenzipfel, welches sich aufgrund einer Erkrankung, beispielsweise einer Gingivitis, Parodontitis oder Parodontose, zurückgebildet hat. Weiter wird im Allgemeinen festgehalten, dass die Aussparungen dabei derart geformt sind, dass sie die Aufnahme des Aufsatzkörpers in Bereichen einer zu regenerierenden Gingiva - insbesondere an den Punkten der oralen und vestibulären Papillenzipfel - erweitern. Die Aussparungen dienen hierbei als Matrize für das angesaugte Papillengewebe und ermöglichen dadurch eine kontrollierte Ausdehnung desselben.

Ist die Aufnahme an eine Zahnreihe des Ober- und/oder Unterkiefers und deren Zahnfleisch ansetzbar, kann der Aufsatzkörper konstruktiv vereinfacht werden, weil Zahnzwischenräume überbrückt und damit nicht besonders abgedichtet werden müssen. Zudem kann mit solch einer Aufnahme ein dicht an das Zahnfleisch der Zahnreihe anschließender Aufsatzkörper geschaffen werden, der mit der Dichtlippe zusammenwirkt, um die Menge an Leckluft weiter zu reduzieren. Letzteres auch insbesondere dadurch, dass die Dichtlippe die Aufnahme vollständig umläuft. Im Gegensatz zum Stand der Technik kann damit ein anzulegender Unterdruck über längere Zeit und auch stabiler gehalten werden - und somit die Reproduzierbarkeit der Behandlung weiter erhöhen.

Ist der Aufsatzköper als eine an den Schienenenden geschlossene Dentalschiene ausgebildet, können die Herstellungskosten des Aufsatzköpers durch Anwendung bekannte Herstellungsverfahren erheblich reduziert werden. Ein derartiger Aufsatzköper kann beispielsweise als Abguss einer Positivform, welche mithilfe eines Abdrucks des Ober- oder Unterkiefers erzeugt wird, unter Berücksichtigung der Aussparung bzw. Aussparungen angefertigt werden. Durch die an den Schienenenden geschlossene Ausführung der Dentalschiene kann außerdem eine die Zahnreihe umlaufende Abdichtung sichergestellt werden.

Eine standfeste Abdichtung der Aufnahme gegenüber Leckluft kann erreicht werden, wenn der im Querschnitt U-förmig ausgebildete Aufsatzkörper an seinen gegenüberliegenden Schenkeln in der Dichtlippe endet. Die oralen und vestibulären Schenkel des Aufsatzkörpers können nämlich als direkte Verlängerung der Dichtlippe zusätzlich zur Abdichtung des Aufsatzkörpers und damit zur weiteren Reduktion der Leckluft beitragen.

Eine verbesserte Vergleichmäßigung der Unterdruckverhältnisse über die Aufnahme hinweg kann dadurch erfolgen, indem der Aufsatzköper einen mit dem Unterdruckanschluss verbundenen Verteilerkanal aufweist, der in die Aufnahme mehrmals parallel einmündet. Zudem kann durch den Verteilerkanal der Unterdruck effektiv auf jene Bereiche der Gingiva angewandt werden, welche einer entsprechenden Behandlung bedürfen.

Weist der Aufsatzköper mehrere Aussparungen auf, in die der Verteilerkanal parallel einmündet, können die Unterdruckverhältnisse in den Aussparungen exakt eingestellt werden. Zudem können damit die lokalen Unterdrücke gegenseitig abgeglichen werden, um in den Aussparungen gleiche Druckverhältnisse sicherzustellen. Der erfindungsgemäße Aufsatzkörper kann damit die Reproduzierbarkeit des Verfahrens weiter erhöhen.

Im Allgemeinen wird festgehalten, dass durch Variation der Verteilerkanal-Durchmesser eine individuelle Einstellung des Partialdrucks in der jeweiligen Aussparung möglich ist.

Die homogene Verteilung des Unterdrucks über die Aufnahme kann verbessert werden, wenn der Verteilerkanal entlang der Längsrichtung mindestens eines Schenkels des Aufsatzkörpers verläuft.

Weist der Schenkel zwischen Verteilerkanal und Aussparung zumindest ein Durchgangsloch auf, kann sich die Konstruktion des Aufsatzkörpers vereinfachen und zudem eine kompakte Bauform ermöglicht werden.

Ist der Aufsatzkörper im Bereich der Aussparung biegesteif ausgeführt, so kann ein stabilerer und standfesterer Aufsatzkörper auf einfache Art und Weise geschaffen werden. Diese biegefeste Ausbildung kann beispielsweise durch eine erhöhte Wandstärke des Aufsatzkörpers in diesem Bereich erreicht werden.

Der erfindungsgemäße Aufsatzkörper kann auf besonders einfache und somit kostengünstige Art und Weise hergestellt werden, wenn er aus einem thermoplastischen Elastomer besteht.

Besonders kann sich der erfindungsgemäße Aufsatzkörper bei einer Vorrichtung zur Regeneration von Zahnfleisch auszeichnen, wenn diese Vorrichtung zudem eine Pumpe zur Erzeugung eines Unterdrucks und einen mit der Pumpe und dem Schlauchanschluss des Aufsatzkörpers verbundenen Unterdruckschlauch aufweist.

Weist die Pumpe einen Sekretabscheider und einen mit dem Sekretabscheider verbundenen Sekretbehälter auf, kann diese frei von Verunreinigungen durch angesaugte Flüssigkeiten gehalten werden und - womit die Vorrichtung in ihrer Wartungsfreundlichkeit und Standfestigkeit verbessert ist.

In den Figuren ist beispielsweise der Erfindungsgegenstand anhand einer Ausführungsvariante näher dargestellt. Es zeigen
- Fig. 1: eine schematische Ansicht auf eine Vorrichtung zur Regeneration von Zahnfleisch,
- Fig. 2: eine vergrößerte Teilansicht des Aufsatzkörpers der Vorrichtung nach Fig. 1,
- Fig. 3: eine Detailansicht der Fig. 2 und
- Fig. 4: eine abgerissene Schnittansicht des in der Fig. 2 dargestellten Aufsatzkörpers - aufgesetzt auf einen Zahn und dessen angrenzendem Zahnfleisch der Zahnreihe des Unterkiefers.

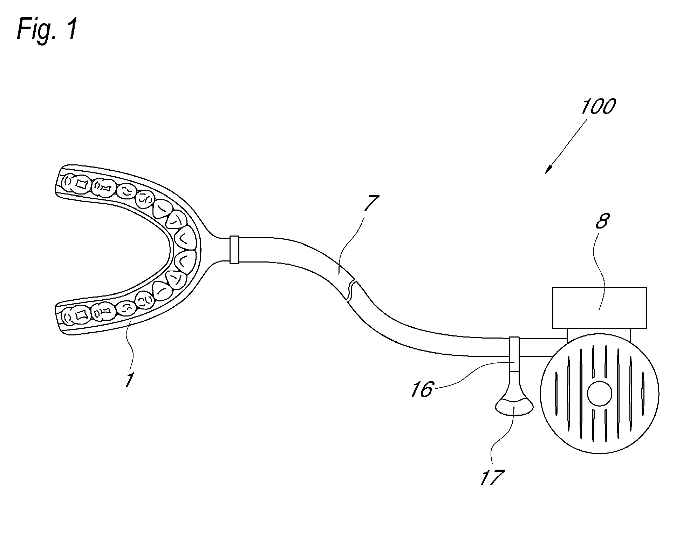

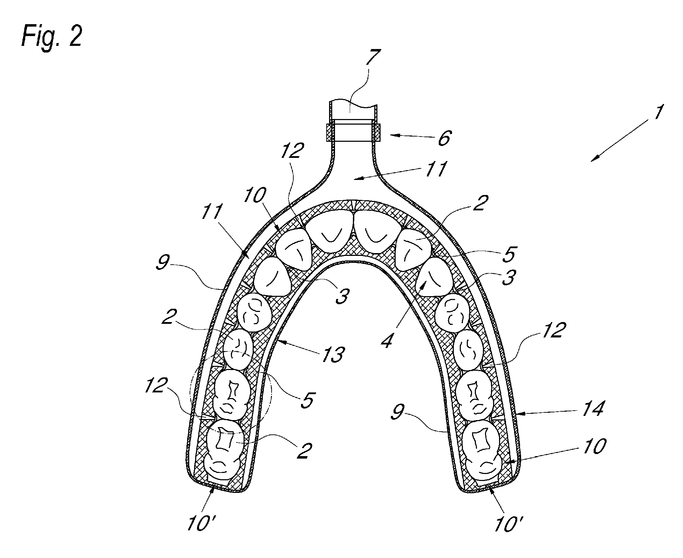

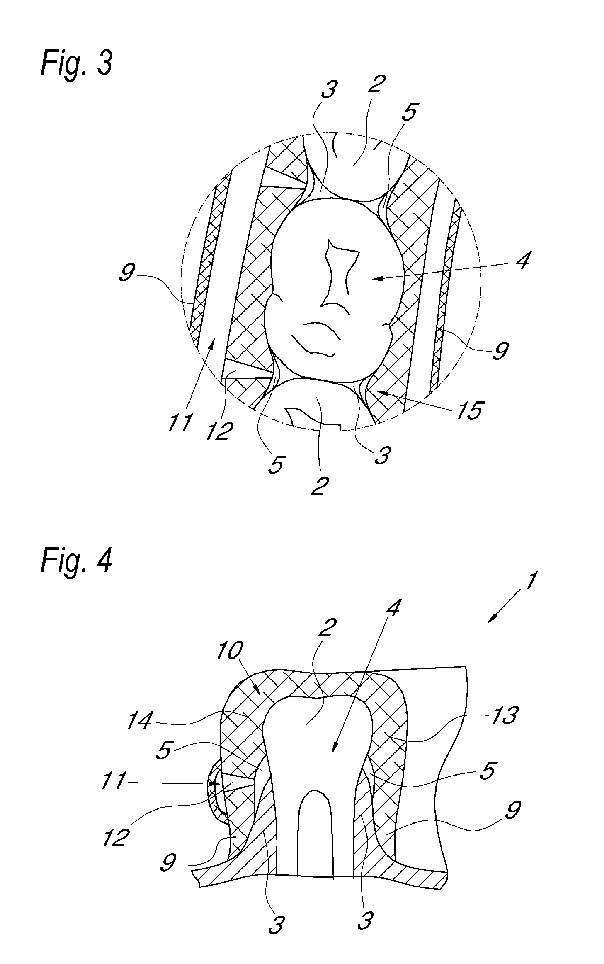

Gemäß Fig. 1 ist beispielsweise eine Vorrichtung 100 zur Regeneration von Zahnfleisch gezeigt. Die Vorrichtung umfasst dabei einen Aufsatzkörper 1 - der in den Figuren 2, 3 und 4 näher dargestellt ist. Dieser Aufsatzkörper 1 wird zunächst an den Istzustand von mindestens einem Zahn 2 und von dessen angrenzendem Zahnfleisch 3 bereichsweise angepasst, beispielsweise durch einen Negativabdruck, wodurch im Aufsatzkörper 1 eine Aufnahme eingebracht wird, die auf einen Zahn und dessen Zahnfleisch ansetzbar ist. Entsprechend Fig. 4 ist weiter zu erkennen, dass der Aufsatzkörper 1 an seiner rechten Seite höher am Zahnfleisch entlang gezogen und damit an dieses mehr angepasst ist, als dies im Vergleich dazu an seiner gegenüberliegenden linken Seite der Fall ist. Dies dient dazu, am Aufsatzkörper 1 mehrere in der Aufnahme 4 vorgesehene Aussparungen 5 für das regenerierte Zahnfleisch auszubilden - wobei diese Aussparungen 5 vorteilhaft individuell anpassbar sind, je nach erforderlichem oder gewünschtem Regenerationszustand des diesbezüglichen Zahnfleisches 3. Die Regeneration des Zahnfleisches 3 erfolgt über Einbringung von Unterdruck in die Aufnahme 4 bzw. in deren Aussparungen 5 - wozu die Aussparungen 5 mit wenigstens dem Anschluss 6 für ein Unterdruckmittel verbunden ist. Zur Abdichtung der Aufnahme gegenüber Leckluft weist der Aufsatzkörper eine gasdichte Dichtlippe 9 auf.

Im Gegensatz dem Stand der Technik ist der Aufsatzkörper 1 konstruktiv besonders einfach ausgeführt. Dies wird erreicht, indem der Aufsatzkörper 1 in seinem Material gasdicht ausgeführt ist und daher keine weiteren besonderen Maßnahmen zur Abdichtung des in der Aussparung 5 eingebrachten Unterdrucks bedarf. Zudem läuft der Aufsatzkörper 1 in der Dichtlippe 9 aus, was das Eindringen von Leckluft in die Aussparung 5 zusätzlich erschwert. Diese Dichtlippe 9 kann insbesondere in Fig. 4 erkannt werden, welche Dichtlippe 9 sich an das Zahnfleisch 3 des Zahns 2 anlegtunterstützt durch das Einbringen von Unterdruck in die Aussparung 5.

Des Weiteren ist der Aufsatzkörper 1 vergleichsweise einfach handhabbar, indem ein Unterdruckschlauch 7 einer Pumpe 8 der Vorrichtung 100 einfach an den Aufsatzkörper 1 angeschlossen werden kann, nämlich an den als Schlauchanschluss ausgeführten Anschluss 6 des Aufsatzkörpers 1, indem der Aufsatzkörper 1 auch endet. Damit kann der Unterdruck über eine außerhalb des Mundraums vorgesehenen Pumpe, beispielsweise Vakuumpumpe, im Aufsatzkörper 1 erzeugt werden.

Insbesondere in Fig. 2 ist erkennbar, dass die Aufnahme 4 an eine Zahnreihe und deren Zahnfleisch 3 angepasst ist. Dabei kann es sich um die Zahnreihe des Oberoder Unterkiefers handeln - genauso ist vorstellbar, diese beim Ansatzkörper für Ober- und Unterkiefers vorzusehen. Die Anpassung der Aufnahme 4 an eine gesamte Zahnreihe ist besonders vorteilhaft, da in diesem Fall nicht für eine gesonderte Abdichtung zwischen den Zähnen 2 gesorgt werden muss. Daher kann die Dichtlippe 9 derart ausgeführt sein, dass sie die Aufnahme 4 vollständig umläuft. Diese vollständig umlaufende Dichtlippe 9 kann sich als besonders vorteilhaft erweisen, wenn der Aufsatzkörper 1 als Dentalschiene 10 ausgebildet ist, wobei diese Dentalschiene 10 an den Schienenenden 10' geschlossen ist. Dadurch kann die Dentalschiene 10 die Zahnreihe vollständig umlaufen und eine lückenlose Abdichtung gewährleisten.

Eine solche Dentalschiene 10 kann etwa dadurch geschaffen werden, dass ein Negativabdruck des Ober- und/oder Unterkiefers abgenommen wird, welcher Negativabdruck an den zu regenerierenden Stellen mit Aussparungen 5 versehen wird, um den Regenerationszustand festzulegen - aus welchem Abdruck in weiterer Folge eine Positivform erzeugt und von dieser Positivform schließlich die Dentalschiene 10 als Abguss hergestellt wird. Alternativ kann die Dentalschiene 10 beispielsweise auch computerunterstützt modelliert werden (CAD) und beispielsweise durch ein generatives Fertigungsverfahren, insbesondere 3D-Druck, hergestellt werden.

In Fig. 4 ist gezeigt, dass der Aufsatzkörper 1 zwei, einander gegenüberliegende Schenkel 13, 14 aufweist. Insbesondere weist der Aufsatzkörper einen oralen Schenkel 13 und einen vestibulären Schenkel 14 auf. Entsprechend Fig. 2 kann der U-förmige Querschnitt des Aufsatzkörpers 1 erkannt werden, wobei jeweils der orale Schenkel 13 an der Innenseite und der vesitbuläre Schenkel 14 an der Außenseite der U-förmigen Kontur angeordnet ist. Entsprechend Fig. 4 ist erkennbar, dass der Aufsatzkörper 1 an seinen jeweiligen Schenkeln 13, 14 in der Dichtlippe 9 endet. Damit kann eine passgenaue Abdichtung des Aufsatzkörpers 1 sichergestellt werden.

Entsprechend Fig. 2 ist zu erkennen, dass der Aufsatzkörper 1 einen Verteilerkanal 11 aufweist, welcher mit dem Unterdruckanschluss 6 verbunden ist. Der Verteilerkanal 11 ist hierbei durch mehrere parallel verlaufende Einmündungen 12 mit der Aufnahme 4 verbunden. Insbesondere verbinden die Einmündungen 12 die Aussparungen 5 mit dem Verteilerkanal 11. Dies kann im Detail in Fig. 3 erkannt werden. Durch den Verteilerkanal 11 kann der Unterdruck dabei vom Unterdruckanschluss 6 ausgehend gleichmäßig auf alle Aussparungen 5 verteilt werden und für eine gut steuerbare und reproduzierbare Behandlung der zu regenerierenden Bereiche der Gingiva 3 sorgen.

Entsprechend Fig. 4 ist zu erkennen, dass der Verteilerkanal 11 in Längsrichtung entlang des vestibulären Schenkels 14 verläuft. Analog kann der Verteilerkanal 11 ebenfalls auf dem oralen Schenkel 14 angebracht sein, bzw. ein weiterer Verteilerkanal 11 an dem oralen Schenkel 14 angebracht sein - was jedoch in den Figuren nicht näher dargestellt wurde.
Insbesondere sind die Einmündungen des Verteilerkanals 11 dabei in Form von Durchgangslöchern 12, zwischen Verteilerkanal 11 und Aussparung 5, ausgeführt, um die Aufnahme 4 des Aufsatzkörpers 1 mit Unterdruck zu beaufschlagen.

In der Fig. 3 ist dargestellt, dass der Aufsatzkörper 1 im Bereich einer Aussparung 5 biegesteif ausgeführt ist. Hierzu weist die Dentalschiene 10 eine mächtigere Wandstärke, insbesondere eine Verdickung 15, im Bereich der Aussparung 5 auf. Gleicht dabei die Dentalschiene 10 die Kontur der Zähne 2 und des Zahnfleisches 3 aus, so kann der Aufsatzkörper 1 auf einfache Weise stabiler und verwindungsfester ausgeführt werden.

Gemäß Fig. 1 ist eine Vorrichtung 100 zur Regeneration eines Zahnfleisches gedacht, wobei der erfindungsgemäße Aufsatzkörper 1 über einen Unterdruckschlauch 7 mit einer Pumpe 8 verbunden ist.

Entsprechend Fig. 1 ist dargestellt, dass der Pumpe 8 der Vorrichtung 100 ein Sekretabscheider 16 vorgeschaltet ist, der außerhalb des Mundraums positioniert, das Eindringen von Flüssigkeiten in die Pumpe 8 vermeidet. Dazu ist zum Auffangen des Sekrets ein Sekretbehälter 17 vorgesehen.

## Patentansprüche

1. Aufsatzkörper zur Regeneration von Zahnfleisch (3) mit einer mindestens an einen Zahn (2) und dessen Zahnfleisch (3) ansetzbaren Aufnahme (4), mit einer in der Aufnahme (4) vorgesehenen Aussparung (5) für das regenerierte Zahnfleisch (3), mit mindestens einem mit der Aussparung (5) verbundenen Anschluss (6) für ein Unterdruckmittel zur Erzeugung eines Unterdrucks in der Aussparung (5) und mit wenigstens einer gasdichten Dichtlippe (9) zur Abdichtung der Aufnahme (4), **dadurch gekennzeichnet, dass** der in seinem Material gasdichte Aufsatzkörper (1) in der Dichtlippe (9) ausläuft und einen Schlauchanschluss (6) zum Anschließen eines Unterdruckschlauchs (7) einer Pumpe (8) aufweist.

2. Aufsatzkörper nach Anspruch 1, **dadurch gekennzeichnet, dass** die Aufnahme (4) an eine Zahnreihe des Ober- und/oder Unterkiefers und deren Zahnfleisch (3) ansetzbar ist und die Dichtlippe (9) die Aufnahme (4) vollständig umläuft.

3. Aufsatzkörper nach Anspruch 2, **dadurch gekennzeichnet, dass** der Aufsatzköper (1) als eine an den Schienenenden (10') geschlossene Dentalschiene (10) ausgebildet ist.

4. Aufsatzkörper nach Anspruch 1, 2 oder 3, **dadurch gekennzeichnet, dass** der im Querschnitt U-förmig ausgebildete Aufsatzkörper (1) an seinen gegenüberliegenden Schenkeln (13, 14) in der Dichtlippe (9) endet.

5. Aufsatzkörper nach einem der Ansprüche 1 bis 4, **dadurch gekennzeichnet, dass** der Aufsatzköper (1) einen mit dem Unterdruckanschluss (6) verbundenen Verteilerkanal (11) aufweist, der in die Aufnahme (4) mehrmals parallel einmündet.

6. Aufsatzkörper nach Anspruch 5, **dadurch gekennzeichnet, dass** der Aufsatzköper (1) mehrere Aussparungen (5) aufweist, in die der Verteilerkanal (11) parallel einmündet.

7. Aufsatzkörper nach Anspruch 5 oder 6, **dadurch gekennzeichnet, dass** der Verteilerkanal (11) entlang der Längsrichtung mindestens eines Schenkels (13, 14) des Aufsatzkörpers (1) verläuft.

8. Aufsatzkörper nach Anspruch 7, **dadurch gekennzeichnet, dass** der Schenkel (13, 14) zwischen Verteilerkanal (11) und Aussparung (4) zumindest ein Durchgangsloch (12) aufweist.

9. Aufsatzkörper nach einem der Ansprüche 1 bis 8, **dadurch gekennzeichnet, dass** der Aufsatzkörper (1) im Bereich der Aussparung (4) biegesteif ausgeführt ist.

10. Aufsatzkörper nach einem der Ansprüche 1 bis 9, **dadurch gekennzeichnet, dass** der Aufsatzkörper (1) aus einem thermoplastischen Elastomer besteht.

11. Vorrichtung (100) zur Regeneration von Zahnfleisch mit einem Aufsatzkörper (1) nach einem der Ansprüche 1 bis 10, mit einer Pumpe (8) zur Erzeugung eines Unterdrucks und mit einem mit der Pumpe (8) und dem Schlauchanschluss (6) des Aufsatzkörpers (1) verbundenen Unterdruckschlauch (7).

12. Vorrichtung nach Anspruch 11, **dadurch gekennzeichnet, dass** die Pumpe (8) einen Sekretabscheider (16) und einen mit dem Sekretabscheider (16) verbundenen Sekretbehälter (17) aufweist.
